**Europäisches Patentamt**

**European Patent Office**

**Office européen des brevets**

(19)

(11) Veröffentlichungsnummer : **0 062 796**
**B1**

# (12) EUROPÄISCHE PATENTSCHRIFT

(45) Veröffentlichungstag der Patentschrift :
**13.06.84**

(21) Anmeldenummer : **82102425.4**

(22) Anmeldetag : **24.03.82**

(51) Int. Cl.³ : **C 03 B 35/16**

(54) **Anlage für die Behandlung von warmen und/oder zu erwärmenden Glasscheiben.**

(30) Priorität : **03.04.81 DE 3113410**

(43) Veröffentlichungstag der Anmeldung :
**20.10.82 Patentblatt 82/42**

(45) Bekanntmachung des Hinweises auf die Patenterteilung : **13.06.84 Patentblatt 84/24**

(84) Benannte Vertragsstaaten :
**AT BE CH FR GB IT LI LU NL SE**

(56) Entgegenhaltungen :
**US-A- 3 994 711**

(73) Patentinhaber : **Frielingsdorf, Horst**
**Am Meisenhort 2**
**D-5630 Remscheid 11 (DE)**

(72) Erfinder : **Frielingsdorf, Horst**
**Am Meisenhort 2**
**D-5630 Remscheid 11 (DE)**

(74) Vertreter : **Andrejewski, Walter et al**
**Patentanwälte Andrejewski, Honke & Partner Postfach 10 02 54 Theaterplatz 3**
**D-4300 Essen 1 (DE)**

**Beschreibung**

Die Erfindung bezieht sich gattungsgemäß auf eine Anlage für die Behandlung von warmen und/oder zu erwärmenden Glasscheiben, insbesondere Vorspannanlage für Glasscheiben, mit zumindest einer Behandlungsstation, die einen Rollenrost mit einer Mehrzahl von Transportrollen vom Radius R aufweist, wobei die Transportrollen an eine Antriebseinrichtung angeschlossen und mit einer Transportwinkelgeschwindigkeit w(trans) sowie mit einer Oszillationswinkelgeschwindigkeit w(osc) synchron antreibbar sind.

Eine Winkelgeschwindigkeit ist bekanntlich aus der Umdrehungszahl pro Zeiteinheit ableitbar. Wird sie im Bogenmaß gemessen, so gibt im vorliegenden Falle das Produkt aus Radius der Transportrollen mal Winkelgeschwindigkeit die translatorische Geschwindigkeit der auf den Transportrollen transportierten Glasscheiben an. Diese Transportgeschwindigkeit kann bei Anlagen der beschriebenen Gattung einen vorgegebenen, von der Behandlung abhängigen Wert aufweisen, und die Antriebseinrichtung ist entsprechend ausgelegt. Es versteht sich von selbst, daß die Transportgeschwindigkeit auch null sein kann, der Transport also gestoppt werden kann. Der Ausdruck Transportrollen umfaßt auch Transportwalzen. Handelt es sich bei den Anlagen für die Behandlung der warmen oder erwärmten Glasscheiben um Vorspannanlagen, so gehören zu einer solchen Anlage im allgemeinen zumindest zwei Behandlungsstationen, nämlich einerseits eine Wärmstation mit Ofen und andererseits eine Kühlstation oder Härtestation mit Kühleinrichtung oder Abschreckeinrichtung.

Bei den bekannten gattungsgemäßen Anlagen (DE-C-704 219, Abbildung 1 und Seite 2, Zeile 32 bis 58) werden die Glasscheiben in die Behandlungsstation bzw. in die Behandlungsstationen mit einer gleichsinnigen translatorischen Transportgeschwindigkeit vorgegebener Größe eingeführt und dann in der Behandlungsstation einer hin- und hergehenden Bewegung unterworfen, die sich aus der Oszillationswinkelgeschwindigkeit der Transportrollen ableitet. Dabei erfolgt die Behandlung. Ist die Behandlung abgeschlossen, so wird die oszillierende oder hin- und hergehende Bewegung wieder abgeschaltet, die Transportrollen bewegen sich wieder mit ihrer Transportwinkelgeschwindigkeit und die behandelte Glasscheibe wird aus der Behandlungsstation herausgeführt. Auf diese Weise mag es gelingen, zu verhindern, daß die Glasscheiben zwischen den Transportrollen durchhängen und sich in störendem Maße verformen. Das alles ist aber nicht frei von Nachteilen : Tatsächlich kann die Behandlung in den Behandlungsstationen nicht mehr kontinuierlich erfolgen, sie erfolgt diskontinuierlich mit Transportpausen in den Behandlungsstationen, wobei während der Transportpausen die Transportrollen sich mit ihrer Oszillationswinkelgeschwindigkeit bewegen. Die bekannten Maßnahmen verlangen daher einen sehr hohen anlagetechnischen Aufwand. Bei vorgegebener Kapazität muß eine Mehrzahl von Behandlungsstationen parallel geschaltet werden. Beim Abtransport ist immer noch ein durchhängendes Verformen der Glasscheiben zwischen den Transportrollen möglich, wenn die Glasscheiben entsprechend hohe Temperatur aufweisen, beispielsweise einen Behandlungsofen verlassen.

In der Praxis sind Anlagen für die Behandlung von warmen bzw. erwärmten Glasscheiben und insbesondere Vorspannanlagen für Glasscheiben gebräuchlich, bei denen die Transportrollen nur mit einer gleichsinnigen Transportwinkelgeschwindigkeit bewegbar sind, wenn auch in unterschiedlichen Geschwindigkeitsstufen und mit Unterbrechung. Dann besteht die Gefahr, des Durchhängens oder Durchbiegens der Glasscheiben zwischen den Transportrollen. Um diese Gefahr zu mindern, müssen die Transportgeschwindigkeiten verhältnismäßig hoch gewählt werden, was wiederum entsprechend lange Behandlungsstationen und insbesondere entsprechend lange Durchlauföfen erforderlich macht. Auch hier ist also der Aufwand erheblich.

Der Erfindung liegt die Aufgabe zugrunde, eine gattungsgemäße Anlage so weiter auszubilden, daß für die zu behandelnden Glasscheiben in den Behandlungsstationen ein kontinuierlicher Transport mit vorgegebener Transportgeschwindigkeit möglich ist, und zwar ohne sich die Glasscheiben zwischen den Transportrollen durchhängend verformen.

Zur Lösung dieser Aufgabe lehrt die Erfindung, daß die Transportrollen der gattungsgemäßen Anlage gleichzeitig mit der Transportgeschwindigkeit w(trans) und mit der der Transportwinkelgeschwindigkeit w(trans) überlagerten Oszillationswinkelgeschwindigkeit w(osc) antreibbar sind, so daß die Glasscheiben sich gegenüber dem Rollenrost mit der Glasscheibenrelativgeschwindigkeit Rw (trans) plus Rw(osc) bewegt, R gleich Radius der Transportrollen, und daß außerdem der Rollenrost mit einer oszillierenden translatorischen Geschwindigkeit $v_R$ (osc) hin- und hergehend antreibbar ist.

Grundsätzlich ist es bekannt, bei einer Anlage für die Behandlung von warmen oder erwärmten Glasscheiben mit einem Transportrollenrost zu arbeiten, der eine hin- und hergehende Bewegung ausführt (DE-PS 494 248). Hier dient jedoch die hin- und hergehende Bewegung lediglich dazu, eine zu behandelnde Glasscheibe in einem Behandlungsofen abzulegen.

Die Erfindung geht von der Erkenntnis aus, daß bei einer Superposition der Transportwinkelgeschwindigkeit w(trans) und der Oszillationswinkelgeschwindigkeit w(osc) der Transportrollen sowohl eine Transportbewegung als auch eine Veränderung der Auflager für die Glasscheiben im Sinne einer Hin- und Herbewegung so möglich ist, daß ein Durchhängen selbst sehr weicher und dünner Glasscheiben zwischen den Transportrollen nicht mehr auftritt. Es versteht sich von selbst, daß die Amplitude und die Frequenz der hin- und hergehenden Bewegung des Rollenrostes und auch die Oszillationskomponente Rw(osc) der Glasscheibenrelativgeschwindigkeit nach Maßgabe der Glasscheibendicke und Glasscheibentemperatur so gewählt werden, daß das Durchbiegen nicht eintritt.

Eine bevorzugte Ausführungsform der Erfindung, bei der die Transportkomponente der Glasscheibenrelativgeschwindigkeit Rw(trans) allein den Transportweg der Glasscheiben bestimmt ist, ist dadurch gekennzeichnet, daß die oszillierende, translatorische Geschwindigkeit $v_R(osc)$ des Rollenrostes dem Betrage nach stets ebenso groß ist wie die Oszillationskomponente Rw(osc) der Glasscheibenrelativgeschwindigkeit, jedoch entgegengesetzt gerichtet ist :

$$v_R(osc) = Rw(osc).$$

Im Rahmen der Erfindung kann die Antriebseinrichtung auf verschiedene Weise gestaltet sein. Das gilt sowohl für den Antrieb der Transportrollen als auch für den hin- und hergehenden Antrieb des Rollenrostes. Insbesondere können die einzelzelnen Transportrollen mit einzelnen Motor/Getriebeanordnungen versehen sein, die mit dem Antrieb für die hin- und hergehende Bewegung des Rollenrostes, beispielsweise über einen Mikroprozessor, zusammenarbeiten. Es besteht aber auch die Möglichkeit, mit klassischen mechanischen Antriebs- und Steuerungsmitteln die beschriebenen Bewegungsabläufe zu koppeln. Dazu lehrt die Erfindung, daß die Antriebseinrichtung für die Transportrollen einen gleichsinnig umlaufenden Kettentrieb aufweist, dessen Umlaufgeschwindigkeit der Transportkomponente Rw(trans) der Glasscheibenrelativgeschwindigkeit entspricht oder proportional ist, daß der Rollenrost an einen zusätzlichen Antrieb für seine hin- und hergehende translatorische Bewegung der Geschwindigkeit $v_R(osc)$ angeschlossen ist und daß dadurch die Oszillationskomponente Rw(osc) der Glasscheibenrelativgeschwindigkeit von der hin- und hergehenden translatorischen Bewegung des Rollenrostes abgeleitet ist. Bei dem Antrieb für den Rollenrost kann es sich um einen Kurbelantrieb oder auch um einen Antrieb mittels Zylinderkolbenanordnung handeln. Endlich kann auch insoweit mit einem Kettentrieb gearbeitet werden. Um die Oszillationskomponente Rw(osc) der Glasscheibenrelativgeschwindigkeit gegenüber dem Rollenrost von dessen hin- und hergehender translatorischen Bewegung abzuleiten, verfährt man im einfachsten Falle so, daß die Transportrollen Antriebsritzel aufweisen, die mit entsprechenden Zahnausbildungen des Kettentriebes kämmen. Dabei läßt sich ohne Schwierigkeiten auch die bevorzugte Ausführungsform der Erfindung verwirklichen, bei der allein die Transportwinkelgeschwindigkeit der Transportrollen die Transportgeschwindigkeit der Glasscheiben bestimmt. Dazu ist es lediglich erforderlich, daß die Antriebsritzel einen Teilkreisdurchmesser aufweisen, der mit dem Transportrollendurchmesser übereinstimmt, wobei sich die Transportrollen auf der Unterseite der Glasscheiben abwälzen.

Die erreichten Vorteile sind darin zu sehen, daß bei der erfindungsgemäßen Anlage die zu behandelnden Glasscheiben in der Behandlungsstation bzw. in den Behandlungsstationen mit einer genau vorgegebenen und dem angestrebten Behandlungsergebnis anpaßbaren Transportgeschwindigkeit bewegt werden können. Ein Durchlängen der Glasscheiben ist ausgeschlossen, weil während dieses Transportes die Transportrollen ihre Lage gegenüber den Glasscheiben zusätzlich oszillierend so verändern, daß dieses Durchhängen verhindert wird. Das geschieht infolge der Überlagerung der Transportwinkelgeschwindigkeit Rw(trans) und der Oszillationsgeschwindigkeit Rw(osc) sowie durch die hin- und hergehende Bewegung des Rollenrostes. Wie bereits erwähnt, lassen sich Frequenz und Amplitude dieser Bewegungen stets so einrichten, daß jedes Durchhängen vermieden wird, und zwar auch dann, wenn es sich um die Behandlung von sehr dünnen und/oder sehr weichen Glasscheiben handelt, und wenn die Transportrollen in Transportrichtung einen verhältnismäßig großen Abstand aufweisen. Da die Transportgeschwindigkeit auch langsam gewählt werden kann, sind lange Behandlungsstationen, z. B. lange Durchlauföfen, nicht mehr erforderlich. Der anlagetechnische Aufwand läßt sich daher erheblich reduzieren. Es versteht sich von selbst, daß bei einer erfindungsgemäßen Anlage die Transportrollen wahlweise auch nur mit der Transportwinkelgeschwindigkeit antreibbar sind, wenn beispielsweise ein schneller Transport erfolgen soll, oder aber nur mit der Oszillationswinkelgeschwindigkeit, wenn eine zu behandelnde weiche Glasscheibe mit optimaler Unterstützung in einer Behandlungsstation in Ruhe bleiben soll. Ohne Schwierigkeiten kann zwischen den Transportrollen Behandlungsluft, z. B. Kühlluft, hindurchgeblasen werden (DE-PS 490 119).

Im folgenden wird die Erfindung anhand einer lediglich Ausführungsbeispiele darstellenden Zeichnung ausführlicher erläutert. Es zeigen :

Figur 1 ein Schema einer erfindungsgemäßen Anlage,

Figur 2 einen vergrößerten Ausschnitt aus Fig. 1,

Figur 3 entsprechend der Fig. 1 eine andere Ausführungsform einer erfindungsgemäßen Anlage.

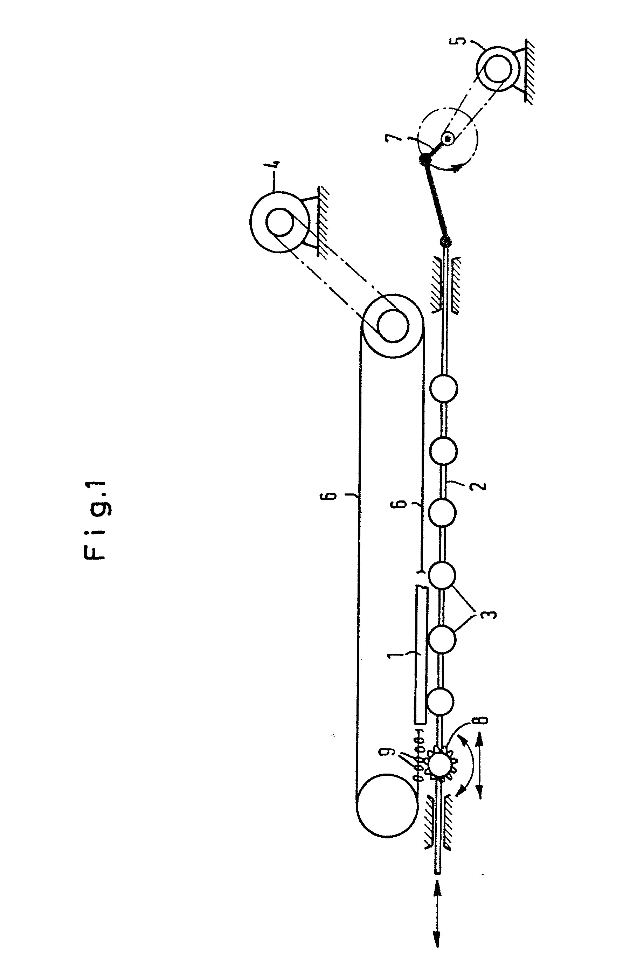

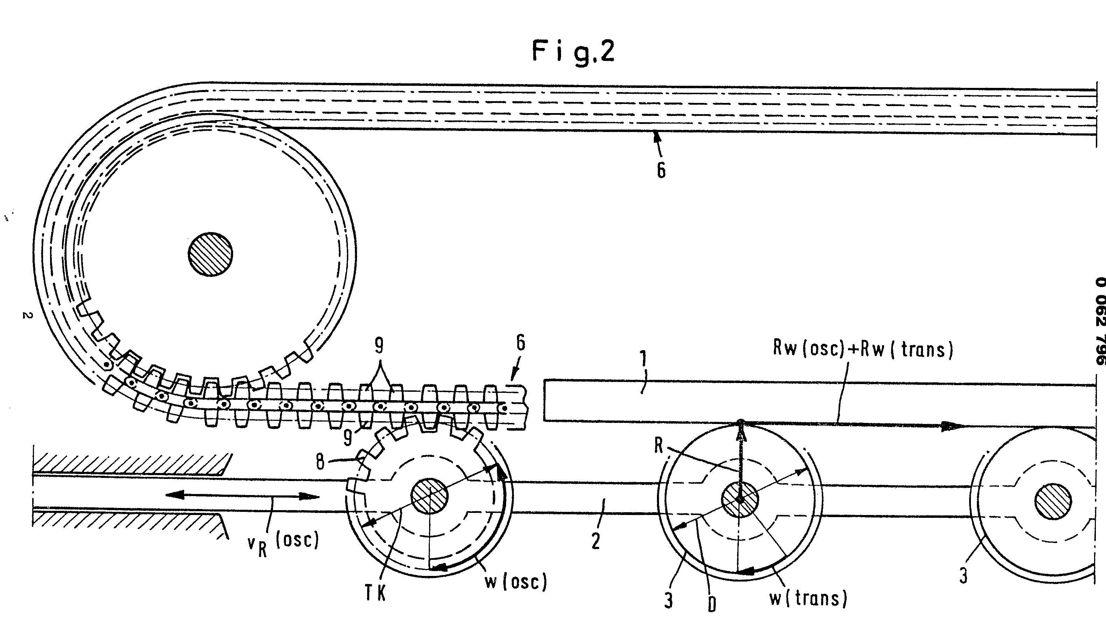

Die in der Fig. 1 dargestellte Anlage ist für die Behandlung von warmen Glasscheiben 1 bestimmt. Aus Gründen der Deutlichkeit wurd nur eine Glasscheibe 1 gezeichnet. Es mag sich bei der Anlage um eine Vorspannanlage für Glasscheiben 1 handeln, und zwar um den Durchlaufofen oder auch um die Härtestation oder Kühlstation. Im letzteren Falle sind selbstverständlich zusätzlich die üblichen Blaskästen vorgesehen. Jedenfalls ist die Behandlungsstation mit einem Rollenrost 2 versehen, der eine Mehrzahl von Transportrollen 3 vom Radius R aufweist. Es versteht sich von selbst, daß dem Rollenrost 2 andere Transporteinrichtungen, beispielsweise ebenfalls in Form von Rollgängen, vorgeschaltet und/oder nachgeschaltet sind. Die Transportrollen 3 können auch beheizte oder gekühlte Rollen oder mit Kühleinrichtungen kombiniert sein. Sie sind an eine Antriebseinrichtung 4, 5 angeschlossen und sind mit einer Transportwinkelgeschwindigkeit w(trans) sowie mit einer Oszillationswinkelgeschwindigkeit w(osc) synchron antreibbar, welche Geschwindigkeiten in Fig. 2 bei verschiedenen Transportrollen 3 durch Bodenpfeil verdeutlich sein.

Die Anordnung ist so getroffen, daß die Transportrollen 3 gleichzeitig mit der Transportwinkelgeschwindigkeit w(trans) und mit der der Transportwinkelgeschwindigkeit w(trans) überlagerten Oszillationswinkelgeschwindigkeit w(osc) antreibbar sind. Das hat zur Folge, daß die Glasscheibe 1 sich genenüber dem Rollenrost 2 mit einer Glasscheibenrelativgeschwindigkeit Rw(trans) plus Rw(osc) bewegt. Außerdem ist aber der Rollenrost 2 mit einer oszillierenden translatorischen Geschwindigkeit $v_R$(osc) hin- und hergehend antreibbar. Im Ausführungsbeispiel und nach bevorzugter Ausführungsform der Erfindung ist die Anordnung so getroffen, daß die oszillierende translatorische Geschwindigkeit $v_R$(osc) dem Betrage nach stets ebenso groß ist wie die Oszillationskomponente Rw(osc) der Glasscheibenrelativgeschwindigkeit gegenüber dem Rollenrost, jedoch ist sie entgegengesetzt gerichtet. Anders ausgedrückt gilt die Beziehung

$$v_R(osc) = -Rw(osc).$$

Die Antriebseinrichtung 4, 5 für die Transportrollen 3 und für den Rollenrost 2 ist im Ausführungsbeispiel eine vollmechanische Antriebseinrichtung. Zu dieser Antriebseinrichtung für die Transportrollen 3 gehört ein gleichzeitig umlaufender Kettentrieb 6, dessen Umlaufgeschwingkeit der Transportkomponente Rw(trans) der Glasscheibenrelativgeschwindigkeit entspricht oder proportional ist. Der Rollenrost 2 ist an einen zusätzlichen Antrieb 5 für seine hin- und hergehende translatorische Bewegung der Geschwindigkeit $v_R$(osc) angeschlossen. Dadurch ist die Oszillationskomponente Rw(osc) der Glasscheibenrelativgeschwindigkeit von der hin- und hergehenden translatorischen Bewegung des Rollenrostes 2 abgeleitet. Im Ausführungsbeispiel erfolgt der Antrieb des Kettentriebes 6 beispielsweise über einen Gleichstrommotor 4, der zur Einstellung der Transportwinkelgeschwindigkeit und damit der Transportgeschwindigkeitskomponente Rw(trans) bezüglich seiner Drehzal einstellbar ist. Der Antrieb für die translatorische, hin- und hergehende Bewegung $v_R$(osc) des Rollenrostes 2 erfolgt im Ausführungsbeispiel über einen Kurbeltrieb 7, der ebenfalls an einen Elektromotor 5 angeschlossen ist. Es erfolgt eine verhältnismäßig schenelle Oszillation. Die Transportrollen 3 weisen Antriebsritzel 8 auf, die mit entsprechenden Zahnausbildungen 9 des Kettentriebes 6 kämmen. Angedeutet wurde in der Fig. 2, daß die Antriebsritzel 8 einen Teilkreisdurchmesser TK aufweisen, der mit dem Transportrollendurchmesser D übereinstimmt, während die Transportrollen 3 an der Unterseite der zu behandelnden Glasscheiben 1 sich abwälzen.

Nicht gezeichnet wurde, daß im Abstandszwischenraum zwischen benachbarten Transportrollen 3 Stützelemente mit Stützauflagern angeordnet sein können, deren Stützauflager das gleiche Niveau wie die Auflagerlinien der Transportrollen 3 aufweisen. Die Stützauflager können ihrerseits als Rollen ausgeführt, sowie mit den Stützelementen oder gegenüber diesen heb- und senkbar sein. Die Steuerung kann mit Hilfe von Abstandsfühlern geschehen.

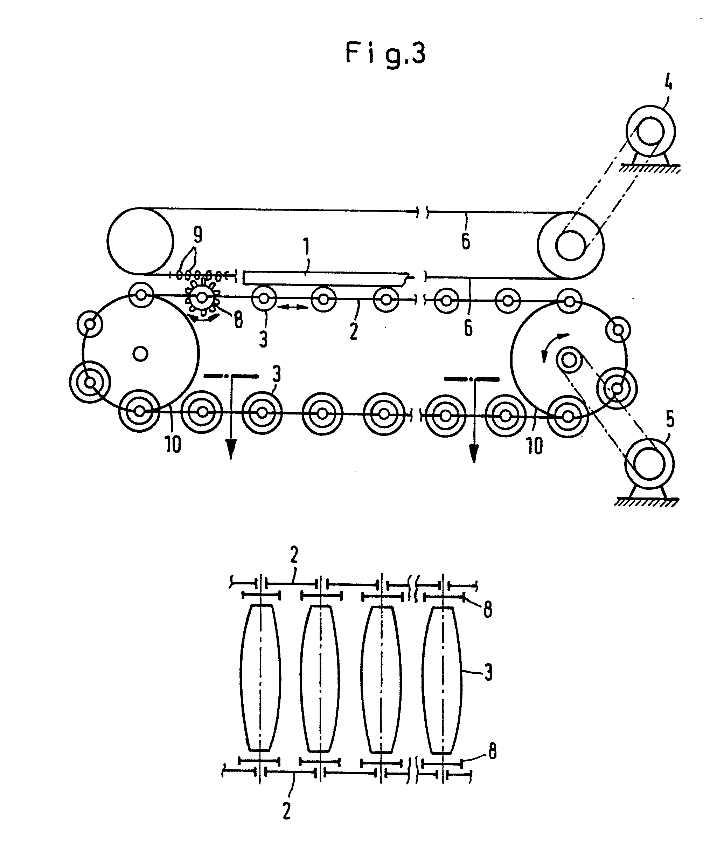

Bei der Ausführungsform nach Fig. 3 sind die kinetischen Zusammenhänge genauso wie in Fig. 1. Das deuten die eingezeichneten Pfeile an. Der Rollenrost ist jedoch zu einem Rollenrostband 2 weiter ausgebildet, welches nur mit dem oberen Trum die zu behandelnden Glasscheiben 1 aufnimmt. Folglich besteht die Möglichkeit, unterschiedliche Abschnitte des Rollenrostbandes 2 in Behandlungsposition zu bringen, wozu das Rollenrostband 2 über und mit Hilfe der Umlenkräder 10 entsprechend bewegt. Zum Beispiel kann so in der Behandlungsstation einmal mit zylindrischen Rollen, zum anderen mit bombierten oder hyperbolischen Transportrollen gearbeitet werden. Die zu behandelnden Glasscheiben erfahren dann entsprechende Verformungen. Im Rahmen der Erfindung liegt es, den Kettentrieb 6 insgesamt mit einem Hubsystem auszurüsten, um die Transportrollen 3 zum Zwecke der Wartung und Pflege bzw. zum Zwecke des Auswechselns zugänglich zu machen.

**Ansprüche**

1. Anlage für die Behandlung von warmen und/oder zu erwärmenden Glasscheiben, insbesondere Vorspannanlage für Glasscheiben, mit zumindest einer Behandlungsstation, die einen Rollenrost mit einer Mehrzahl von Transportrollen vom Radius R aufweist, wobei die Transportrollen an eine Antriebseinrichtung angeschlossen und mit einer Transportwinkelgeschwindigkeit w(trans) sowie mit einer Oszillationswinkelgeschwindigkeit w(osc) synchron antreibbar sind, dadurch gekennzeichnet, daß die Transportrollen (3) gleichzeitig mit der Transportwinkelgeschwindigkeit w(trans) und mit der der Transportwinkelgeschwindigkeit w(trans) überlagerten Oszillationswinkelgeschwindigkeit w(osc) antreibbar sind, so daß die Glasscheiben (1) sich gegenüber dem Rollenrost (2) mit der Glasscheibenrelativgeschwindigkeit Rw(trans) plus Rw(osc) bewegen, R gleich Radius der Transportrollen (3), und daß außerdem der Rollenrost (2) mit einer oszillierenden translatorischen Geschwindigkeit $v_R$(osc) hin- und hergehend antreibbar ist.

2. Anlage nach Anspruch 1, dadurch gekennzeichnet, daß die oszillierende, translatorische Geschwindigkeit $v_R$(osc) des Rollenrostes (2) dem Betrage nach stets ebenso groß ist wie die Oszillationskomponente Rw(osc) der Glasscheibenrelativgeschwindigkeit, jedoch entgegengesetzt gerichtet ist : $v_R$(osc) = − Rw(osc).

3. Anlage nach einem der Ansprüche 1 oder 2, dadurch gekennzeichnet, daß die Antriebseinrichtung (4) für die Transportrollen (3) einen gleichsinnig umlaufenden Kettentreib (6) aufweist, dessen Umlaufgeschwindigkeit der Transportkompomente Rw(trans) der Glasscheibenrelativgeschwindigkeit entspricht oder proportional ist, daß der Rollenrost (2) an einen zusätzlichen Antrieb (5) für seine hin- und hergehende translatorische Bewegung der Geschwindigkeit $v_R$(osc) angeschlossen ist und daß dadurch die Oszillationskomponente Rw(osc) der Glasscheibenrelativgeschwindigkeit von der hin- und hergehenden translatorischen Bewegung des Rollenrostes (2) abgeleitet ist.

4. Anlage nach Anspruch 3, dadurch gekennzeichnet, daß die Transportrollen (3) Antriebsritzel (8) aufweisen, die mit entsprechenden Zahnausbildungen (9) des Kettentriebes (6) kämmen.

5. Anlage nach Anspruch 4, dadurch gekennzeichnet, daß die Antriebsritzel (8) einen Teilkreisdurchmesser (TK) aufweisen, der mit dem Transportrollendurchmesser (D) übereinstimmt.

## Claims

1. An installation for the manipulation of panes of glass that are hot and/or are to be heated, particularly an installation for pre-stressing panes of glass, with at least one manipulation station which features a roll-deck with a plurality of transport rolls, in which the transport rolls are connected to a driving equipment and can be driven synchronously at a transport angular velocity w(trans) and an oscillation angular velocity w(osc), characterized in that the transport rolls (3) are driven simultaneously at the transport angular velocity w(trans) and at the oscillation angular velocity w(osc) superimposed on the transport angular velocity w(trans), so that the panes of glass (1) move relatively to the roll-deck (2) at the glass pane relative velocity Rw(trans) plus Rw(osc), R being equal to the radius of the transport rolls (3), and that in addition the roll-deck (2) can be driven to and fro at an oscillating translatory velocity $v_R$(osc).

2. An installation according to Claim 1, characterized in that the oscillating translatory velocity $v_R$(osc) of roll-deck (2) is always as large in amount as the oscillation component Rw(osc) of the glass pane relative velocity but is directed in the opposite direction : $v_R$(osc) = − Rw(osc).

3. An installation according to one of Claims 1 or 2, characterized in that the driving equipment (4) for the transport rolls (3) possesses a chain drive (6) rotating in the same direction, its rotational velocity being equal or proportional to the transport component Rw(trans) of the glass pane relative velocity, that the roll-deck (2) is attached to an additional drive (5) for its to-and-fro translatory movement at velocity $v_R$(osc) and that thereby the oscillation component Rw(osc) of the glass pane relative velocity is derived from the to-and-fro translatory movement of roll-deck (2).

4. An installation according to Claim 3, characterized in that the transport rolls (3) possess driving gears (8) that mesh with corresponding tooth projections (9) of the chain drive (6).

5. An installation according to Claim 4, characterized in that the driving gears (5) possess a pitch circle diameter (TK) that corresponds to the diameter of the transport rolls (D).

## Revendications

1. Installation pour le traitement de feuilles de verre à l'état chaud et/ou devant être chauffées, notamment installation de mise en précontrainte pour des feuilles de verre, comportant au moins un poste de traitement qui possède une grille à rouleaux munie d'une multiplicité de rouleaux de transport possédant un rayon R, les rouleaux de transport étant raccordés à un dispositif d'entraînement et pouvant être entraînés en synchronisme avec une vitesse angulaire de transport w(trans) ainsi qu'avec une vitesse angulaire d'oscillation w(osc), caractérisée en ce que les rouleaux de transport (3) peuvent être entraînés simultanément avec la vitesse angulaire de transport w(trans) et avec la vitesse angulaire d'oscillation w(osc) superposée à la vitesse angulaire de transport w(trans), de telle sorte que les feuilles de verre (1) se déplacent par rapport à la grille à rouleaux (2) avec la vitesse relative Rw(trans) plus Rw(osc), R étant égal au rayon des rouleaux de transport (3), et qu'en outre la grille à rouleaux (2) peut être entraînée selon un mouvement de va-et-vient avec une vitesse de translation oscillatoire $v_R$(osc).

2. Installation selon la revendication 1, caractérisée en ce que la vitesse de translation oscillatoire $v_R$(osc) de la grille à rouleaux (2) possède une valeur toujours égale à la composante d'oscillation Rw(osc) de la vitesse relative des feuilles de verre, mais avec le signe opposé : $v_r$(osc) = − Rw(osc).

3. Installation selon l'une des revendications 1 ou 2, caractérisée en ce que le dispositif (4) d'entraînement des rouleaux de transport (3) possède un mécanisme d'entraînement à chaîne (6) tournant dans le même sens et dont la vitesse périphérique correspond ou est proportionnelle à la composante de transport Rw(trans) de la vitesse relative des feuilles de verre, que la grille à rouleaux (2) est raccordée à un mécanisme d'entraînement supplémentaire (5) pour son déplacement de translation en va-et-vient, ayant la vitesse $v_R(osc)$ et que de ce fait la composante d'oscillation $Rw(osc)$ de la vitesse relative des feuilles de verre est dérivée du déplacement en translation de va-et-vient de la grille à rouleaux (2).

4. Installation selon la revendication 3, caractérisée en ce que les rouleaux de transport (3) comportent des pignons d'entraînement (8) qui engrènent avec les dents correspondantes (9) du mécanisme d'entraînement à chaîne (6).

5. Installation selon la revendication 4, caractérisée en ce que les pignons d'entraînement (8) possèdent un diamètre nominal (TK) qui coïncide avec le diamètre (D) des rouleaux de transport.

# Fig.1

0 062 796

# Fig.2

# Fig.3